# EUROPÄISCHE PATENTSCHRIFT

(11) **EP 3 546 980 B1**
(45) Veröffentlichungstag und Bekanntmachung des Hinweises auf die Patenterteilung: **21.10.2020**
(21) Anmeldenummer: 18164201.8
(22) Anmeldetag: 27.03.2018
(51) Int. Cl.: G01S 7/481, G01S 17/02, G01S 17/08

(54) **OPTISCHER SENSOR**
OPTICAL SENSOR
CAPTEUR OPTIQUE

(43) Veröffentlichungstag der Anmeldung: 02.10.2019
(73) Patentinhaber: Leuze electronic GmbH + Co. KG, 73277 Owen/Teck (DE)
(72) Erfinder: Wendel, Simon, 73230 Kirchheim unter Teck (DE)
(74) Vertreter: Ruckh, Rainer Gerhard

(56) Entgegenhaltungen:
- EP-A1- 1 947 550
- WO-A1-2012/099767
- JP-U- H0 656 944
- US-A1- 2016 025 855

## Beschreibung

Die Erfindung betrifft einen optischen Sensor zum Erkennen von Objekten in einem Überwachungsbereich des Sensors gemäß dem Oberbegriff des Anspruchs 1.

Derartige optische Sensoren dienen zur Erfassung von Objekten in einem Überwachungsbereich und sind als schaltende oder messende Sensoren ausgebildet, mittels deren die Distanzen eines Objektes im Überwachungsbereich bestimmt werden können.

Die DE 10 2004 038 257 A1 beschreibt einen optischen Sensor zum Erkennen von Objekten in einem Überwachungsbereich des Sensors, mit einem Sendelichtstrahlen emittierenden Sender, dem eine Sendeoptik nachgelagert ist und einem Empfangslichtstrahlen empfangenden Empfänger, dem eine Empfängeroptik vorgelagert ist. Eine Auswerteeinheit ist vorgesehen, um ein Objektfeststellungssignal in Abhängigkeit von Empfangssignalen am Ausgang des Empfängers zu generieren. Der Lichtsender und der Empfänger sowie ihre zugeordneten Optiken sind koaxial angeordnet und ein zentraler Bereich der Sende- und Empfangsoptik dient zur Kollimation der Sendelichtstrahlen und der äußere Bereich der Empfangsoptik dient zur Fokussierung der Empfangslichtstrahlen auf den Empfänger. Die Sende- und Empfangsoptik besteht aus einem Glassubstrat mit darauf aufgedruckten Kunststoff-Schichten. Zur optischen Trennung der Sendelichtstrahlen und der Empfangslichtstrahlen ist eine Trenneinrichtung in der Art einer zylindrischen Röhre aus nicht transparentem Material vorgesehen, in der der Sender und die Sendeoptik angeordnet sind.

Die Empfangsoptik ist aus einer Plankonvexlinse aus Glas gebildet. Auf ihrer Rückseite sind Kunststoffschichten aufgebracht und definieren eine Fernbereichszone zum Auffangen von Empfangslichtstrahlen aus großer Distanz und eine Nahbereichszone zum Auffangen von Empfangslichtstrahlen aus geringer Distanz.

Die DE 10 2016 106 154 B3 beschreibt einen entfernungsmessenden optoelektronischen Sensor zur Erfassung eines Objektes in einem Überwachungsbereich des Sensors. Der Sensor weist einen Lichtsender zum Aussenden eines Lichtstrahls auf das Objekt auf, sowie einen Lichtempfänger zum Erzeugen von Signalen durch den am Objekt remittierten Lichtstrahl auf. Der Empfänger weist eine Empfangsoptik auf um das remittierte Licht aus einem Fernbereich und aus einem Nachbereich zu bündeln. Hierzu ist die Empfangsoptik als Fresnel-Linse oder als Gürtellinse gebildet. Die Sendoptik und die Empfangsoptik weisen unterschiedliche Achsen auf. Der durch die verwendete Empfangsoptik bewirkte, abstandabhängige systemische Zeitfehler ist in einem Speicher einer Auswerteeinheit abgespeichert und wird während des Messbetriebes korrigiert.

Die DE 20 2014 104 739 U1 beschreibt einen optoelektronischen Sensor dessen Sendeoptik und dessen Empfangsoptik unterschiedliche Achsen aufweisen. Die Empfangsoptik weist eine Ausgleichseinrichtung in Form einer Korrekturbeschichtung auf, die bewirkt, dass auch Licht von Objekten, die sich nah am Sensor befinden, erfasst werden kann.

Bei den bekannten Bauformen der optischen Sensoren treten Blindbereiche in Bezug auf zu empfangende, von einem Objekt remittierte Lichtstrahlen auf. Insbesondere werden Lichtstrahlen in einem Übergangsbereich zwischen Sendeoptik und Empfangsoptik, also beispielsweise auf eine tubusförmige Trenneinrichtung der genannten Optiken auftreffende, remittierte Lichtstrahlen nicht erfasst. Zudem ergeben sich verschiedene Einfallswinkel des remittierten Lichts auf die Empfangsoptik in Abhängigkeit davon, ob das Licht aus einem Fernbereich oder einem Nahbereich in Bezug auf die Empfangsoptik stammt. Dadurch ist die Empfangsoptik ohne weitere Maßnahmen nicht dazu in der Lage, das Licht auf den Empfänger zu lenken, das heißt der Sensor ist im Nahbereich blind.

Die JP H06 56944 U betrifft einen optischen Sensor mit einem Lichtstrahlen emittierenden Sender, dem eine Sendeoptik zugeordnet ist, und mit einem Lichtstrahlen empfangenden Empfänger, dem eine Empfangsoptik zugeordnet ist. Der Sendeoptik und der Empfangsoptik, die nebeneinander liegend angeordnet sind, sind eine optische Platte vorgeordnet, die im Bereich zwischen der Sendeoptik und Empfangsoptik in Form einer Linse verbreitert ist.

Die WO 2012/099767 A1 betrifft einen Näherungsschalter mit einem Lichtstrahlen emittierenden Sender und einem Lichtstrahlen empfangenden Empfänger. Zwischen dem Sender und Empfänger ist ein gekrümmter optischer Lichtleiter vorgesehen, der zu einem Glas-Interface geführt ist, das zwischen dem Sender und Empfänger angeordnet ist. Der Lichtleiter leitet zusätzlich Licht zum Empfänger.

Der Erfindung liegt die Aufgabe zugrunde, einen optischen Sensor der eingangs genannten Art bereitzustellen, bei welchem die vorgenannten Nachteile vermieden sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Dadurch dass der optische Sensor eine Einrichtung zur Kollimation von Lichtstrahlen auf die Empfangsoptik aufweist, die in dem Übergangsbereich zwischen Sendeoptik und Empfangsoptik angeordnet ist und Licht aus dem Übergangsbereich auf die Empfangsoptik leitet, ist eine technische Maßnahme gewählt, damit Licht aus einem sehr sendernahen Bereich, das sonst typischerweise durch eine Trenneinrichtung zwischen Sendeoptik und Empfangsoptik (Kanaltrennung) nicht mehr gewonnen werden kann, dennoch gewonnen werden kann. Dies kann zwar zu Lasten eines aus einem Sender-fernen, von dem zu erkennenden Objekt remittierten Licht gehen, jedoch steht für einen Nahbereich, in dem ein Objekt sich zu der Empfangsoptik befindet, wesentlich mehr Licht für den Empfänger zur Verfügung. Insbesondere können auch Objekte in Form von Retroreflektoren erkannt werden, wobei der Sensor gerade hierfür optimiert ist.

Erfindungsgemäß ist die Einrichtung zur Kollimation von Lichtstrahlen auf die Empfangsoptik so angeordnet, dass sie zumindest teilweise, vorzugsweise vollständig eine von dem Lichtsender abgewandte, freie Stirnfläche der Trenneinrichtung zwischen Sendeoptik und Empfangsoptik bedeckt. Dadurch kann Licht, das von dem Objekt remittiert wird, auf die Trenneinrichtung fallen und wird von der Empfangsoptik erfasst. Aus der Sicht der Empfangsoptik scheint dieses Licht aus dem Fernbereich zu kommen. Dabei ist vorteilhaft die Einrichtung zur Kollimation von Lichtstrahlen auf die Empfangsoptik teilweise, vorzugsweise vollständig aus einem transparenten Material gebildet. Das Licht tritt hierbei in die Einrichtung ein und wird durch innere Reflexion auf die Empfangsoptik umgelenkt. Die innere Reflexion des Lichts kann durch Totalreflexion in der Einrichtung bewirkt werden, kann aber auch durch eine reflektierende Beschichtung einer ersten und/oder zweiten Reflexionsfläche der Einrichtung erfolgen. Erfindungsgemäß ist die Einrichtung so aufgebaut, dass eine Eintrittsfläche für von dem Objekt remittiertes Licht eine freie Stirnfläche der Trenneinrichtung überdeckt. Das einfallende Licht wird sodann durch die erste Reflexionsfläche und die zu dieser parallel oder in einem Winkel ausgerichtete, zweite Reflexionsfläche umgelenkt und an einer Austrittsfläche der Einrichtung auf die Empfangsoptik gelenkt. Die Eintrittsfläche und die Austrittfläche sind vorzugweise plan ausgeführt. Es kann auch zweckmäßig sein, vorzugsweise die Austrittsfläche gekrümmt zu bilden, wodurch die Abhängigkeit des Empfangspegels vom Objektabstand beeinflusst werden und/oder eine erhöhte Robustheit gegenüber Positions- und Fertigungstoleranzen der Einrichtung erzielt werden kann.

Die Einrichtung stellt somit eine Art Umleitung für paralleles Licht dar, sodass die wirksame Empfangsoptik um einen Lichtsender-nahen Bereich erweitert wird. Ein etwas Lichtsender-ferner Bereich kann unter Umständen dadurch nicht genutzt werden, da eine Lichtbrechung durch die Einrichtung hin zu der Trenneinrichtung (Kanaltrennung) erfolgen kann.

In einem bevorzugten Ausführungsbeispiel des optischen Sensors sind die Eintrittsfläche und die Austrittfläche parallel zueinander angeordnet und die erste und zweite Reflexionsfläche parallel zueinander und mit einem Winkel von 45° jeweils zu der Eintrittsfläche und der Austrittsfläche angeordnet. Der Winkel wird hierbei auch bevorzugt zu der optischen Achse von Sende- und Empfangsoptik von den Reflexionsflächen eingenommen.

Auf diese Weise wird eine interne Totalreflexion zur rechtwinkligen Umlenkung des in die Eintrittsfläche eintretenden Lichts genutzt. Nicht parallel zu der optischen Achse der Empfangsoptik in die Einrichtung zur Kollimation einfallende Lichtstrahlen treten parallel zu der optischen Achse der Empfangsoptik aus der Einrichtung aus. Eine Winkelabweichung der Lichtstrahlen aus dem Nahbereich der Empfangsoptik wird somit korrigiert. Zu diesem Zweck kann es vorteilhaft sein, die plane Eintrittsfläche oder Austrittsfläche mit einem von 90° zu der optischen Achse der Empfangsoptik oder Sendeoptik verschiedenen Winkel zu kippen. Dadurch kann eine Anpassung an eine bevorzugte Objektentfernung zu der Einrichtung erfolgen. Eine solche bevorzugte Objektentfernung kann zum Beispiel 200 mm betragen. In einer besonders einfach herstellbaren und wirkungsvollen Ausführungsform der Einrichtung zur Kollimation kann diese in der Art eines Ringes mit eckiger oder kreisförmiger Grundrißform gebildet sein und vollständig aus transparentem Material bestehen. Es kann auch zweckmäßig sein, die Einrichtung aus einzelnen Ringsegmenten zu bilden. Die Ringsegmente können miteinander verbunden oder separat voneinander gebildet sein. Die Gestalt des Ringes oder der Ringsegmente ist dabei bevorzugt an die Gestaltsform der Trenneinrichtung (Kanaltrennung) zwischen der Senderoptik und der Empfangsoptik angepaßt. Bei einer tubus- oder zylinderförmigen Gestalt der Trenneinrichtung zwischen der Sendeoptik und der Empfangsoptik ist auch die Gestalt des Ringes dann grundsätzlich kreisförmig. Bevorzugt hat der Ring dabei eine rotationssymmetrische Querschnittsform und ist dadurch einfach zu fertigen.

Um die Entfernungsabhängigkeit des Empfangspegels der Empfangsoptik und des Empfängers zu gestalten, kann der Ring auch anstatt der rotationssymmetrischen Querschnittsform eine nicht um dessen Umfang gleichbleibende Querschnittsform aufweisen. Beispielsweise kann der Winkel, den die Austrittsfläche zu der optischen Achse der Sendeoptik einnimmt in Umfangsrichtung des Ringes variieren. Die Variation kann kontinuierlich oder von einem Ringsegment zum anderen in Stufen erfolgen.

In einem besonders kompakt bauenden Ausführungsbeispiel des optischen Sensors kann die freie Stirnfläche der Trenneinrichtung von Sendeoptik und Empfangsoptik 45° zu der optischen Achse der Sendeoptik einnehmen. Hierbei ist dann vorteilhaft eine dieser Stirnfläche nahe Reflexionsfläche der Einrichtung auch in 45° zu der optischen Achse der Sendeoptik und parallel zu der Stirnfläche der Trenneinrichtung angeordnet. Es kann, wie oben bereits erwähnt, zweckmäßig sein, beide Reflexionsflächen parallel und mit 45° zu der optischen Achse der Sendeoptik anzuordnen. Die als Ring gebildete Einrichtung zur Kollimation von Lichtstrahlen auf die Empfangsoptik kann form- und/oder kraftschlüssig auf die als Kanaltrennwand zwischen Sendoptik und Empfangsoptik ausgebildete Trenneinrichtung aufgeschoben und/oder festgeclipst sein.

Der Ring kann im Spritzgussverfahren aus einem transparenten Kunststoff wie Polymethylmethycrylat PMMA oder Polycarbonat PC gebildet sein.

Die Empfangsoptik und andere optisch wirksame Einrichtungen in dem Sensor sind bevorzugt so gebildet, dass die optischen Weglängen aller Lichtwege, die von dem zu erkennenden Objekt zu der Empfangsoptik und dem Empfänger führen etwa gleich lang oder genau gleich lang sind. Dies kann auch durch eine rechnerische Kompensation der optischen Weglängen in der Auswerteeinheit geschehen.

Die Erfindung wird im Nachstehenden anhand der Zeichnungen erläutert. Es zeigen:
- Fig. 1: eine schematische, perspektivische und nicht maßstäbliche Ansicht eines erfindungsgemäßen optischen Sensors,
- Fig. 2: eine schematische, nicht maßstäbliche Draufsicht auf den optischen Sensor in Fig. 1,
- Fig. 3: einen schematisch dargestellten Strahlengang in einer Einrichtung zur Kollimation von Lichtstrahlen auf die Empfangsoptik des optischen Sensors in den Figuren 1 und 2,
- Fig. 4: einen schematischen Querschnitt durch ein weiteres Ausführungsbeispiel einer Einrichtung zur Kollimation von Lichtstrahlen auf die Empfangsoptik mit 45° zu der optischen Achse der Sendeoptik ausgerichteten Reflexionsflächen, sowie einen Strahlengang in dem Querschnitt,
- Fig. 5: eine teilweise, schematische und perspektivische Ansicht einer Einrichtung zur Kollimation von Lichtstrahlen auf eine Empfangsoptik mit dem in Fig. 4 gezeigten Querschnitt,
- Fig. 6: einen Verlauf eines entfernungsabhängigen Empfangspegels eines optischen Sensors mit und ohne Einrichtung zur Kollimation von Lichtstrahlen auf die Empfangsoptik,
- Fig. 7: einen schematischen Querschnitt durch ein weiteres Ausführungsbeispiel einer Einrichtung zur Kollimation von Lichtstrahlen auf die Empfangsoptik mit einer Austrittsfläche, welche mit einem vom rechten Winkel abweichenden Winkel zu der optischen Achse der Sendeoptik ausgerichtet ist und einen Strahlengang in dem Querschnitt, und
- Fig. 8: eine teilweise, schematische und perspektivische Ansicht einer Einrichtung zur Kollimation von Lichtstrahlen auf die Empfangsoptik mit in tangentialer Umfangsrichtung der Einrichtung sich ändernder Querschnittsform, insbesondere sich änderndem Winkel der Austrittsfläche der Einrichtung zu der optischen Achse der Sendeoptik.

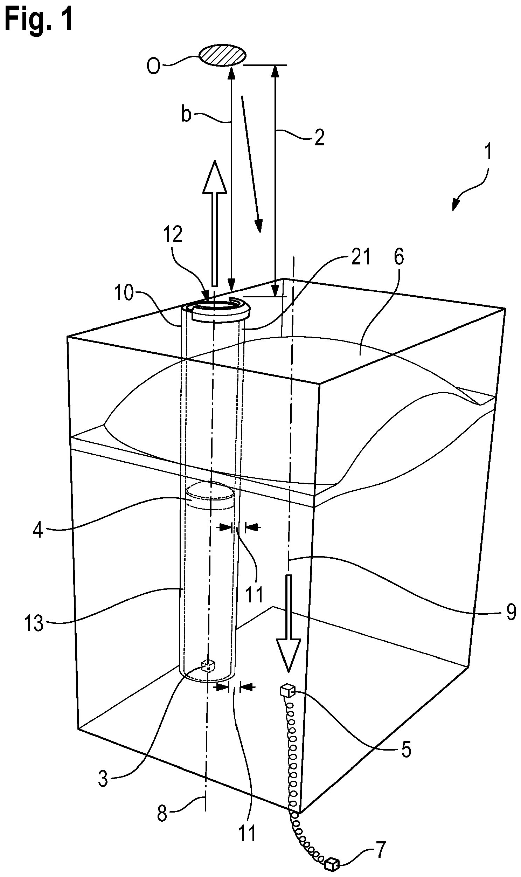

In Fig. 1 ist in einer schematischen, perspektivischen Ansicht ein optischer Sensor 1 zur Erfassung eines Objekts O in einem Überwachungsbereich 2 des Sensors 1 dargestellt. Der optische Sensor 1 ist als Distanzsensor ausgebildet, sodass mit diesem als Objektfeststellungssignal Distanzwerte von Objekten O ermittelt und als Empfangssignal ausgegeben werden. Der optische Sensor 1 weist einen Sendelichtstrahlen emittierenden Lichtsender 3 mit einer nachgelagerten Sendoptik 4 und einen Empfänger 5 mit vorgelagerter Empfangsoptik 6 zum Empfangen von an dem Objekt O remittierten Lichtstrahlen auf. Eine Auswerteeinheit 7 empfängt Signale des Empfängers 5 und generiert Objektfeststellungssignale in Form von Distanzwerten. Ferner dient die Auswerteeinheit 7 zur Ansteuerung des Lichtsenders 3. Der Lichtsender 3 und der Empfänger 5 sind nicht koaxial angeordnet, sodass die Sendeoptik 4 eine optische Achse 8 und die Empfangsoptik 6 eine von der optischen Achse 8 der Sendeoptik 4 verschiedene optische Achse 9 aufweist.

Die von dem Lichtsender 3 und dessen Sendeoptik 4 ausgesandten Lichtstrahlen sind durch eine als Zylinder aus nichttransparentem Material gebildete Kanaltrennwand 21 von der Empfangsoptik 6 separiert. Von dem Objekt O remittiertes und auf die Trenneinrichtung 13 im Übergangsbereich 11 zwischen Sendeoptik 4 und Empfangsoptik 6 einfallendes Licht würde von der Empfangsoptik 6 und dem Empfänger 5 nicht erfasst werden. Zudem fällt Licht bei einem in einen Nahbereich der Empfangsoptik 6 positionierten Objekt O mit Winkeln ein, die sich von parallelem Licht aus dem Fernbereich unterscheidet, sodass die Notwendigkeit besteht, Licht aus dem Nahbereich auch grundsätzlich effizienter auf die Empfangsoptik 6 zu lenken. Um Licht, das insbesondere auf eine Stirnfläche 12 der Kanaltrennwand 21 fallen würde und generell, um Licht aus dem Nahbereich besser erfassen zu können, ist erfindungsgemäß eine Einrichtung 10 zur Kollimation von Lichtstrahlen auf die Empfangsoptik 6 vorgesehen. Die Einrichtung 10 ist im Übergangsbereich 11 zwischen der Sendeoptik 4 und der Empfangsoptik 6 angeordnet. Dadurch wird die Nutzfläche der Empfangsoptik 6 so modifiziert, dass ein Teil des von dem Objekt O remittierten Lichtes im sehr Sender-nahen Bereich gewonnen werden kann. Dies kann zu Lasten eines etwas Sender-fernen Bereiches gehen.

In den gezeigten Ausführungsbeispielen aller Figuren steht für einen Nahbereich von beispielsweise bis zu 200 mm Objektentfernung von der Empfangsoptik 6 wesentlich mehr remittiertes Licht für den Empfänger 5 zur Verfügung.

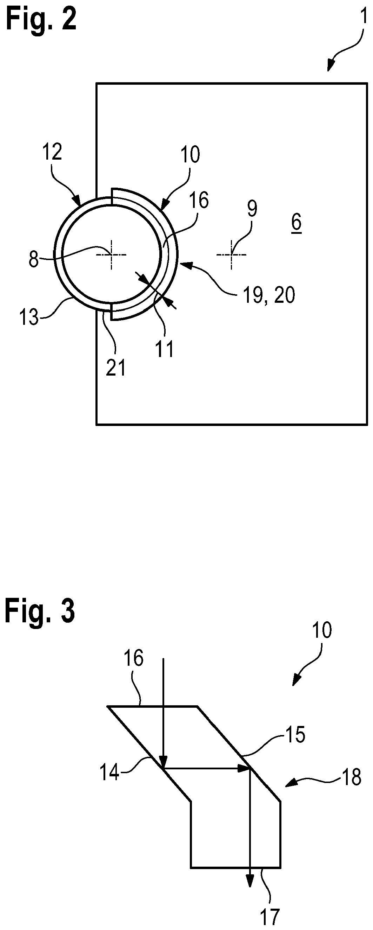

Wie Fig. 2 in einer schematischen Draufsicht auf den Sensor 1 in Fig. 1 zeigt, überdeckt die Einrichtung 10 über etwa die Hälfte des Umfanges der Kanaltrennwand 21 deren freie Stirnfläche 12. Dabei übernimmt die Einrichtung 10 die Lichtumlenkung für die veränderte Strahlenrichtung im Nahbereich und hebt, wie die Figuren 3, 4, 6 und 7 zeigen, durch die voneinander verschiedenen optischen Achsen 8, 9 gebildeten Probleme etwa auf. Licht aus dem Nahbereich wird durch die Einrichtung 10 so umgelenkt und gerichtet, dass es für die nachfolgende Empfangsoptik 6 aus dem Fernbereich zu kommen scheint.

Wie die Figuren 3, 4 und 7 zeigen, ist die Einrichtung 10 zur Kollimation aus einem transparenten Material, beispielweise aus einem der Kunststoffe Polymethylmethacrylat PMMA oder Polycarbonat PC gebildet und in die Einrichtung 10 eintretendes Licht wird durch interne Reflexion auf die Empfangsoptik gelenkt. In den gezeigten Ausführungsbeispielen wird die interne Reflexion des Lichts durch Totalreflexion umgelenkt. Dies wird durch die grundsätzlich in Fig. 3 gezeigte Querschnittsform der Einrichtung 10 bewirkt. Die Einrichtung 10 weist hierbei eine, die freie Stirnfläche 12 der Trenneinrichtung 13 oder Kanaltrennwand 21 vollständig überdeckende Eintrittsfläche 16 auf, die plan ausgebildet ist und etwa oder genau in einem rechten Winkel zu der optischen Achse 8 der Sendeoptik 4 ausgerichtet ist. Der Eintrittsfläche 16 schließt sich Trenneinrichtungs-seitig eine erste Reflexionsfläche 14 in einem Winkel von 45° weg von der freien Stirnfläche 12 an. Parallel zu der ersten Reflexionsfläche 14 ist eine zweite Reflexionsfläche 15 ausgerichtet. An den jeweiligen axialen, der Empfangsoptik zugewandten Endrändern der Reflexionsflächen 14 und 15 schließt sich ein parallel zu der optischen Achse 8 der Sendeoptik 4 verlaufender Abschnitt der Einrichtung 10 an, an dessen axialem Ende sich eine Austrittsfläche 17 für Licht aufspannt.

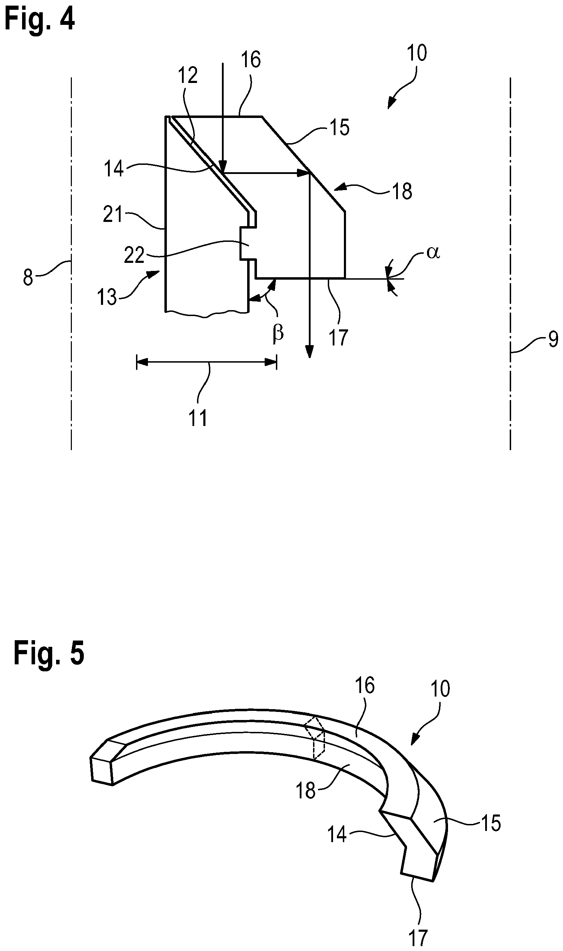

Durch die Austrittsfläche 17 wird zweifach in der Einrichtung 10 umgelenktes Licht parallel gerichtet zu der optischen Achse 8 auf die Empfangsoptik 6 gelenkt. Auch die Austrittsfläche 17 ist plan ausgebildet und in dem in Figur 3 und 4 gezeigten Ausführungsbeispiel mit rechtem Winkel zu der optischen Achse 8 ausgerichtet. Eintrittsfläche 16 und Austrittsfläche 17 sind parallel zueinander angeordnet.

Wie Fig. 4 weiter verdeutlicht, wird jedoch ein Teil des von dem Objekt O remittierten Lichtes, das auf die Außenseite der zweiten Reflexionsfläche 15 trifft, in die Einrichtung 10 hinein gebrochen und an die Trenneinrichtung 13 oder Kanaltrennwand 21 gelenkt und absorbiert, steht also für die Distanzmessung dem Empfänger 5 nicht zur Verfügung. Wie die Figuren 2, 4 und 5 zeigen, ist die Einrichtung 10 zur Kollimation von Lichtstrahlen auf die Empfangsoptik 6 in der Art eines Ringes 18 oder zumindest in der Art von Ringsegmenten 19, 20 gebildet, wobei die Gestalt des Ringes 18 oder der Ringsegment 19, 20 an die Gestalt der Trenneinrichtung 13 angepasst ist. In Fig. 4 sind beispielsweise die freie Stirnfläche 12 der Trenneinrichtung 13 und die erste Reflexionsfläche 14 mit einem Winkel von 45° zu der optischen Achse 8 hin gebeugt. Formschlusselemente 22 in Form von Rastnasen oder -knöpfen sind an dem Ring 18 ausgebildet um nach einem Aufschieben des Ringes 18 auf die Trenneinrichtung 13 mit der Trenneinrichtung 13 zu verrasten. Dadurch wird auch der Ring 18 in einer korrekten Position zu den optischen Achsen 8 und 9 gehalten. Der Ring 18 ist kreisförmig und die Trenneinrichtung 13 ist als zylindrischer Tubus gebildet.

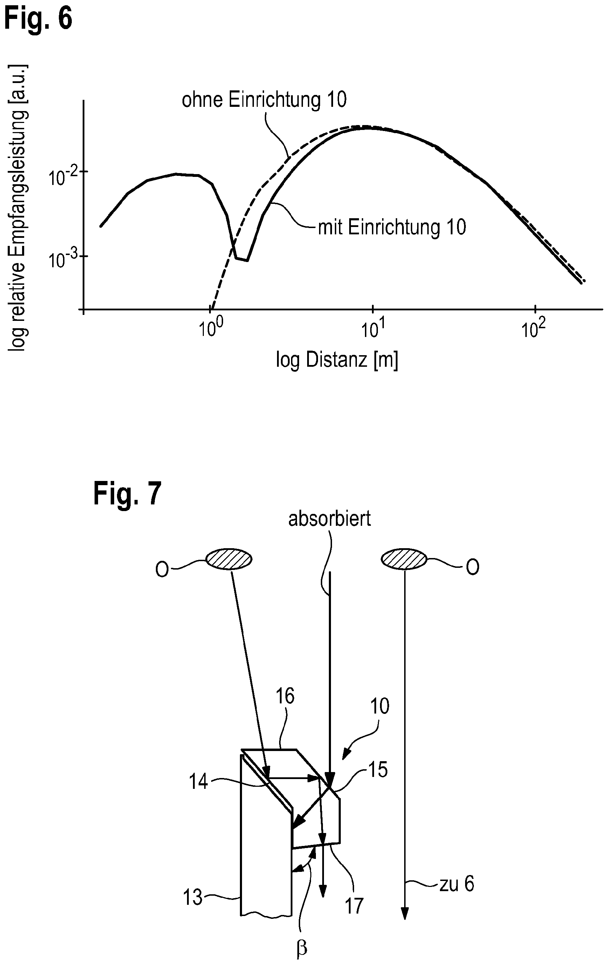

Wie Fig. 7 in einem schematischen Querschnitt durch eine weitere Ausführungsform der Einrichtung 10 zur Kollimation zeigt, kann durch eine Winkelwahl des Winkels β der Austrittsfläche 17 zu der optischen Achse 8 der Sendeoptik 4 bewirkt werden, dass nicht parallel zu der optischen Achse 9 der Empfangsoptik 6 in die Einrichtung10 zur Kollimation einfallende Lichtstrahlen parallel zu der optischen Achse 9 der Empfangsoptik 6 aus der Einrichtung 10 austreten.

Das in den Figuren 1 bis 5 und 7 gezeigte Ausführungsbeispiel der Einrichtung 10 weist über die Längserstreckung oder in Umfangsrichtung betrachtet einen konstanten Winkel β von 90° der Austrittsfläche 17 zu der optischen Achse 8 der Sendoptik 4 auf.

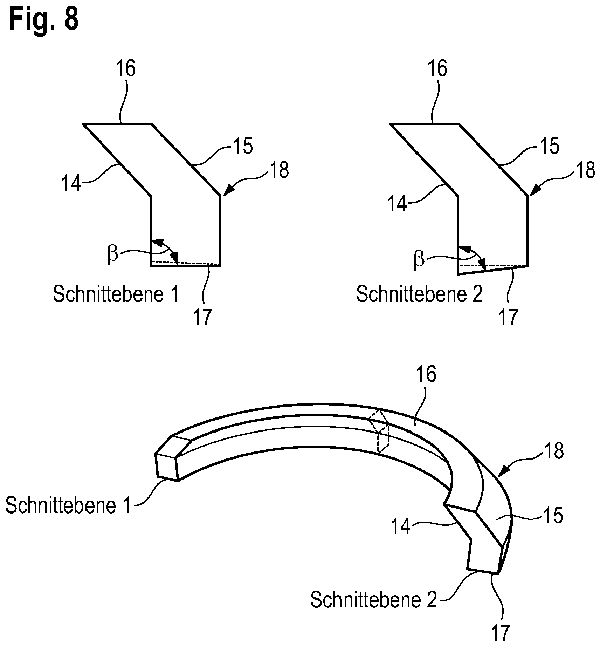

Das in Fig. 8 gezeigte Ausführungsbeispiel der Einrichtung 10 weist hingegen eine Austrittsfläche 17 auf, deren Winkel β zu der optischen Achse 8 der Sendeoptik 4 unterschiedlich ist. Der Winkel β ändert sich hierbei von Ringsegment 19 zu Ringsegment 20 usw., in Stufen oder kontinuierlich. Diese konstruktive Maßnahme kann einen vorteilhaften Verlauf der erzeugbaren Objektfeststellungssignale der Auswerteeinheit 7 bewirken.

Fig. 6 zeigt exemplarisch einen Verlauf eines entfernungsabhängigen (Objektentfernung) Empfangssignales eines optischen Sensors 1 mit und ohne Einrichtung zur Kollimation von remittierten Lichtstrahlen auf eine Empfangsoptik 6 in logarithmischem Maßstab aufgetragen über die relative Empfangsleistung. Wie unschwer zu erkennen ist, ist die minimal messbare Objektdistanz von der Empfangsoptik 6 bei einem Sensor mit der erfindungsgemäßen Einrichtung 10 deutlich reduziert im Vergleich zu einem optischen Sensor ohne die erfindungsgemäße Einrichtung. Zudem ergeben sich auch in dem durch die Erfindung gewonnenen, gut aufgelösten Nahbereich Empfangsleistungen , die im Bereich der Empfangsleistungen des Empfängers 5 liegen, wie sie im mittleren und im Fernbereich gemessen werden können.

Es hat sich gezeigt, dass der optische Pfad remittierten Lichtes durch die Einrichtung 10 etwas länger (zum Beispiel 3 mm) ist, als der optische Pfad remittierten Lichts bei direktem Einfall in die Empfangsoptik 6. Diese vergrößerte Weglänge des optischen Pfades kann durch die Auswerteeinheit 7 mit Hilfe einer in einem Speicher abgelegten Eich- oder Kalibrierkurve rechnerisch kompensiert werden.

Alternativ kann ein Ausgleich der optische Weglängen erreicht werden, indem weitere Maßnahmen ergriffen werden, wie etwa eine im entsprechenden Bereich dickere Frontscheibe für den Weg des Lichts, das nicht über die erfindungsgemäße Einrichtung gelenkt wird.

### Bezugszeichenliste

- (1): Optischer Sensor
- (2): Überwachungsbereich
- (3): Lichtsender
- (4): Sendeoptik
- (5): Empfänger
- (6): Empfangsoptik
- (7): Auswerteeinheit
- (8): Achse, v. 4
- (9): Achse, v. 6
- (10): Einrichtung zur Kollimation
- (11): Übergangsbereich
- (12): Stirnfläche, v. 13
- (13): Trenneinrichtung
- (14): Reflexionsfläche, erste
- (15): Reflexionsfläche, zweite
- (16): Eintrittsfläche
- (17): Austrittsfläche
- (18): Ring
- (19): Ringelement
- (20): Ringelement
- (21): Kanaltrennwand
- (22): Formschlußelement

- a: Winkel, zwischen 16 und 17
- β: Winkel, zwischen 17 und 8
- b: Obj ektentfernung zu 10
- O: Objekt

## Patentansprüche

1. Optischer Sensor zum Erkennen von Objekten (O) in einem Überwachungsbereich (2) des Sensors (1), mit einem Lichtsender (3) mit Sendoptik (4) zum Aussenden von Sendelichtstrahlen, mit einem Empfänger (5) mit Empfangsoptik (6) zum Empfangen von Lichtstrahlen und mit einer Auswerteeinheit (7) zur Generierung eines Objektfeststellungssignals in Abhängigkeit von Empfangssignalen an einem Ausgang des Empfängers (5), wobei die Sendeoptik (4) und die Empfangsoptik (6) unterschiedliche optische Achsen (8, 9) aufweisen, wobei der optische Sensor (1) eine Einrichtung (10) zur Kollimation von Lichtstrahlen auf die Empfangsoptik (6) aufweist, die im Übergangsbereich (11) zwischen der Sendeoptik (4) und der Empfangsoptik (6) angeordnet ist und dazu eingerichtet ist, Licht aus dem Übergangsbereich (11) auf die Empfangsoptik (6) zu leiten, wobei eine eine freie Stirnfläche (12) einer Trenneinrichtung (13) zwischen Sendeoptik (4) und Empfangsoptik (6) zumindest teilweise überdeckenden Eintrittsfläche (16) der Einrichtung (10) zur Kollimation dazu eingerichtet ist, vom Objekt remittiertes und eintretendes Licht zu erfassen und wobei die Einrichtung (10) dazu eingerichtet ist das eintretende Licht durch eine erste Reflexionsfläche (14) und eine zu dieser in einem Winkel oder parallel ausgerichteten zweiten Reflexionsfläche (15) umzulenken und an einer Austrittsfläche (17) der Einrichtung (10) auf die Empfangsoptik (6) zu lenken.

2. Optischer Sensor nach Anspruch 1, **dadurch gekennzeichnet, dass** die Einrichtung (10) zur Kollimation zumindest teilweise aus einem transparenten Material gebildet ist und in die Einrichtung (10) dazu eingerichtet ist, eintretendes Licht durch interne Reflexion auf die Empfangsoptik (6) zu lenken.

3. Optischer Sensor nach Anspruch 2, **dadurch gekennzeichnet, dass** die interne Reflexion des Lichts durch Totalreflexion in der Einrichtung (10) bewirkt ist.

4. Optischer Sensor nach Anspruch 2, **dadurch gekennzeichnet, dass** die interne Reflexion des Lichts zumindest teilweise durch eine reflektierende Beschichtung zumindest der ersten oder zweiten Reflexionsfläche (14, 15) der Einrichtung (10) bewirkt ist.

5. Optischer Sensor nach einem der Ansprüche 1 - 4, **dadurch gekennzeichnet, dass** die Eintrittsfläche (16) und die Austrittsfläche (17) plan gebildet sind.

6. Optischer Sensor nach einem der Ansprüche 1 - 5, **dadurch gekennzeichnet, dass** die Eintrittsfläche (16) und die Austrittsfläche (17) parallel zueinander oder in einem Winkel (α) zueinander angeordnet sind.

7. Optischer Sensor nach einem der Ansprüche 1 - 6, **dadurch gekennzeichnet, dass** die Eintrittsfläche (16) und/oder die Austrittsfläche (17) und/oder die Reflexionsflächen (14, 15) so gebildet sind, dass nicht parallel zu der optischen Achse (9) der Empfangsoptik (6) in die Einrichtung (10) zur Kollimation einfallende Lichtstrahlen parallel zu der optischen Achse (9) der Empfangsoptik (6) aus der Einrichtung (10) austreten.

8. Optischer Sensor nach einem der Ansprüche 1 - 7, **dadurch gekennzeichnet, dass** die Austrittsfläche (17) einen vom rechten Winkel verschiedenen Winkel (β) zu der optischen Achse (8) der Sendeoptik (4) einnimmt.

9. Optischer Sensor nach Anspruch 8, **dadurch gekennzeichnet, dass** der Winkel (β) der Austrittsfläche (17) an eine bevorzugte Objektentfernung (b) zu der Einrichtung (10) angepasst ist.

10. Optischer Sensor nach Anspruch 9, **dadurch gekennzeichnet, dass** die bevorzugte Objektentfernung (b) etwa 200 mm beträgt.

11. Optischer Sensor nach einem der Ansprüche 1 - 10, **dadurch gekennzeichnet, dass** die Einrichtung (10) zur Kollimation von Lichtstrahlen auf die Empfangsoptik (6) in der Art eines Ringes (18) oder als Ringsegmente (19, 20) gebildet ist, dessen/deren Gestalt an die Gestalt der Trenneinrichtung (13) zwischen der Sendeoptik (4) und der Empfangsoptik (6) angepasst ist.

12. Optischer Sensor nach Anspruch 11, **dadurch gekennzeichnet, dass** die Trenneinrichtung zylindrisch gebildet ist und der Ring (18) kreisförmig gebildet ist.

13. Optischer Sensor nach Anspruch 12, **dadurch gekennzeichnet, dass** der Ring (18) einen rotationssymmetrischen Querschnitt aufweist.

14. Optische Sensor nach einem der Ansprüche 11 - 13, **dadurch gekennzeichnet, dass** die Ausrichtung oder der Winkel (β), den die Austrittsfläche (17) zu der optischen Achse (8) der Sendeoptik (4) einnimmt, in Umfangsrichtung des Ringes (18) variiert.

15. Optischer Sensor nach einem der Ansprüche 1 - 14, **dadurch gekennzeichnet, dass** die freie Stirnfläche (12) der Trenneinrichtung (13) 45° zu der optischen Achse (8) der Sendeoptik (4) angeordnet ist und dass zumindest eine Reflexionsfläche (14, 15) der Einrichtung (10) zur Kollimation parallel zu der freien Stirnfläche (12) ausgerichtet ist.

16. Optischer Sensor nach einem der Ansprüche 1 - 15, **dadurch gekennzeichnet, dass** die erste und die zweite Reflexionsfläche (14, 15) der Einrichtung (10) zur Kollimation von Lichtstrahlen auf die Empfangsoptik (6) parallel zueinander ausgerichtet sind.

17. Optischer Sensor nach einem der Ansprüche 1 - 16, **dadurch gekennzeichnet, dass** die Einrichtung (10) zur Kollimation als Ring (18) gebildet, form- und/oder kraftschlüssig auf die als Kanaltrennwand (21) zwischen der Sendoptik (4) und der Empfangsoptik (6) ausgebildete zylindrische Trenneinrichtung (13) aufgeschoben ist.

18. Optischer Sensor nach einem der Ansprüche 1 bis 17, **dadurch gekennzeichnet, dass** die Einrichtung (10) zur Kollimation aus einem Kunststoff, wie Polymethylmethacrylat (PMMA) oder Polycarbonat (PC) gebildet ist.

19. Optischer Sensor nach einem der Ansprüche 1 bis 18, **dadurch gekennzeichnet, dass** der Sensor (1) so gebildet ist, dass die optischen Weglängen aller Lichtwege, die von dem zu erkennenden Objekt (O) zu dem Empfänger (5) führen, etwa oder genau gleich lang sind.

20. Optischer Sensor nach einem der Ansprüche 1 bis 18, **dadurch gekennzeichnet, dass** die Auswerteeinheit (7) dazu ausgebildet ist, eine rechnerische Kompensation der optischen Weglängen aller Lichtwege von dem zu erkennenden Objekt (O) zu der Empfangsoptik (6) durchzuführen.

## Claims

1. Optical sensor for detecting objects (O) in a monitoring area (2) of the sensor (1), having a light transmitter (3) with transmitting optics (4) for transmitting transmitted light beams, having a receiver (5) with receiving optics (6) for receiving light beams and having an evaluation unit (7) for generating an object detection signal as a function of received signals at an output of the receiver (5), wherein the transmitting optics (4) and the receiving optics (6) have different optical axes (8, 9), wherein the optical sensor (1) has a device (10) for collimating light beams onto the receiving optics (6), which is arranged in the transition region (11) between the transmitting optics (4) and the receiving optics (6) and is designed to direct light from the transition zone (11) to the receiving optics (6),
wherein a free end face (12) of a separating device (13), between transmitting optics (4) and receiving optics (6) to at least partially overlapping entry surface (16) of the device (10) is arranged for collimation, to detect light emitted by the object and entering light, and wherein the device (10) is set up to deflect the entering light through a first reflection surface (14) and a second reflection surface (15) aligned at an angle or parallel to this at an angle or parallel to the first reflection surface (14) and to direct it onto the receiving optics (6) at an exit surface (17) of the device (10).

2. The optical sensor according to claim 1, **characterised in that** the device (10) for collimation is formed at least partially from a transparent material and is arranged in the device (10) to direct incoming light by internal reflection onto the receiving optics (6).

3. The optical sensor according to claim 2, **characterised in that** the internal reflection of the light is caused by total reflection in the device (10).

4. The optical sensor according to claim 2, **characterised in that** the internal reflection of the light is at least partially effected by a reflective coating on at least the first or second reflective surface (14, 15) of the device (10).

5. The optical sensor according to one of claims 1 to 4, **characterised in that** the entrance surface (16) and the exit surface (17) are formed flat.

6. The optical sensor according to one of claims 1 to 5, **characterised in that** the entrance surface (16) and the exit surface (17) are arranged parallel to each other or at an angle (α) to each other.

7. The optical sensor according to one of claims 1 to 6, **characterised in that** the entry surface (16) and/or the exit surface (17) and/or the reflection surfaces (14, 15) are formed in such a way that light rays not parallel to the optical axis (9) of the receiving optics (6), which are incident into the device (10) for collimation, exit from the device (10) parallel to the optical axis (9) of the receiving optics (6).

8. The optical sensor according to one of the claims 1 to 7, **characterised in that** the exit surface (17) takes an angle (β) different from the right angle to the optical axis (8) of the transmitting optics (4).

9. The optical sensor according to claim 8, **characterised in that** the angle (β) of the exit surface (17) is adapted to a preferred object distance (b) to the device (10).

10. The optical sensor according to claim 9, **characterised in that** the preferred object distance (b) is about 200 mm.

11. The optical sensor according to one of claims 1 to 10, **characterised in that** the device (10) for collimating light beams onto the receiving optics (6) is formed in the manner of a ring (18) or as ring segments (19, 20), the shape of which is adapted to the shape of the separating device (13) between the transmitting optics (4) and the receiving optics (6).

12. The optical sensor according to claim 11, **characterised in that** the separating device is formed cylindrically and the ring (18) is formed circularly.

13. The optical sensor according to claim 12, **characterised in that** the ring (18) has a rotationally symmetrical cross-section.

14. The optical sensor according to one of claims 11 to 13, **characterised in that** the orientation or the angle (β) which the exit surface (17) assumes with respect to the optical axis (8) of the transmitting optics (4) varies in the circumferential direction of the ring (18).

15. The optical sensor according to one of claims 1 to 14, **characterised in that** the free end face (12) of the separating device (13) is arranged at 45° to the optical axis (8) of the transmitting optics (4) and that at least one reflecting surface (14, 15) of the device (10) for collimation is aligned parallel to the free end face (12).

16. The optical sensor according to one of claims 1 to 15, **characterised in that** the first and second reflecting surfaces (14, 15) of the device (10) for collimating light beams onto the receiving optics (6) are aligned parallel to one another.

17. Optical sensor according to one of claims 1 to 16, **characterised in that** the device (10) for collimation is formed as a ring (18), is pushed in a form-fitting and/or force-fit manner onto the cylindrical separating device (13) formed as a channel separating wall (21) between the transmitting optics (4) and the receiving optics (6).

18. The optical sensor according to any one of claims 1 to 17, **characterised in that** the device (10) for collimation is formed from a plastic, such as polymethyl methacrylate (PMMA) or polycarbonate (PC).

19. The optical sensor according to one of claims 1 to 18, **characterised in that** the sensor (1) is formed in such a way that the optical path lengths of all light paths leading from the object (O) to be detected to the receiver (5) are approximately or exactly the same length.

20. The optical sensor according to one of claims 1 to 18, **characterised in that** the evaluation unit (7) is designed to carry out a mathematical compensation object (O) to be detected by the receiving optics (6).

## Revendications

1. Capteur optique pour la détection d'objets (O) dans une zone de surveillance (2) du capteur (1), avec un émetteur de lumière (3) avec une optique d'émission (4) pour l'émission de rayons lumineux d'émission, avec un récepteur (5) avec une optique de réception (6) pour la réception de rayons lumineux et avec une unité d'évaluation (7) pour la génération d'un signal de détection d'objet en fonction des signaux reçus à une sortie du récepteur (5), dans lequel l'optique d'émission (4) et l'optique de réception (6) présentent des axes optiques (8, 9) différents, dans lequel le capteur optique (1) présente un dispositif (10) pour collimater les rayons lumineux sur l'optique de réception (6), qui est disposé dans la zone de transition (11) entre l'optique d'émission (4) et l'optique de réception (6) et est conçu pour diriger la lumière de la zone de transition (11) vers l'optique de réception (6),
dans lequel une face d'extrémité libre (12) d'un dispositif de séparation (13), entre l'optique d'émission (4) et l'optique de réception (6) et la surface d'entrée (16) du dispositif (10) se chevauchant au moins partiellement, est disposée pour la collimation, afin de détecter la lumière émise par l'objet et la lumière entrante, et dans lequel le dispositif (10) est conçu pour dévier la lumière entrante à travers une première surface de réflexion (14) et une second surface de réflexion (15) orientée sous un angle ou parallèlement à celle-ci sous un angle ou parallèlement à la première surface de réflexion (14) et pour la diriger sur l'optique de réception (6) au niveau d'une surface de sortie (17) du dispositif (10).

2. Capteur optique selon la revendication 1, **caractérisé en ce que** le dispositif (10) de collimation est constitué au moins partiellement d'un matériau transparent et est disposé dans le dispositif (10) pour diriger la lumière entrante par réflexion interne sur l'optique de réception (6).

3. Ccapteur optique selon la revendication 2, **caractérisé en ce que** la réflexion interne de la lumière est provoquée par la réflexion totale dans le dispositif (10).

4. Capteur optique selon la revendication 2, **caractérisé en ce que** la réflexion interne de la lumière est effectuée au moins partiellement par un revêtement réfléchissant sur au moins la première ou la seconde surface réfléchissante (14, 15) du dispositif (10).

5. Capteur optique selon l'une des revendications 1 à 4, **caractérisé en ce que** la surface d'entrée (16) et la surface de sortie (17) sont formées à plat.

6. Capteur optique selon l'une des revendications 1 à 5, **caractérisé en ce que** la surface d'entrée (16) et la surface de sortie (17) sont disposées parallèlement une à l'autreou selon un angle (a) l'une par rapport à l'autre.

7. Capteur optique selon l'une des revendications 1 à 6, **caractérisé en ce que** la surface d'entrée (16) et/ou la surface de sortie (17) et/ou les surfaces de réflexion (14, 15) sont formées de telle manière que les rayons lumineux non parallèles à l'axe optique (9) de l'optique de réception (6), qui sont incidents dans le dispositif (10) pour la collimation, sortent du dispositif (10) parallèlement à l'axe optique (9) de l'optique de réception (6).

8. Capteur optique selon l'une des revendications 1 à 7, **caractérisé en ce que** la surface de sortie (17) présente un angle (β) différent de l'angle droit par rapport à l'axe optique (8) de l'optique de transmission (4).

9. Capteur optique selon la revendication 8, **caractérisé en ce que** l'angle (β) de la surface de sortie (17) est conçu à une distance préférée (b) de l'objet par rapport au dispositif (10).

10. Capteur optique selon la revendication 9, **caractérisé en ce que** la distance préférée de l'objet (b) est d'environ 200 mm.

11. Capteur optique selon l'une des revendications 1 à 10, **caractérisé en ce que** le dispositif (10) pour collimater des rayons lumineux sur l'optique de réception (6) est réalisé à la manière d'un anneau (18) ou sous forme de segments d'anneau (19, 20), dont la forme est adaptée à la forme du dispositif de séparation (13) entre l'optique d'émission (4) et l'optique de réception (6).

12. Capteur optique selon la revendication 11, **caractérisé en ce que** le dispositif de séparation est de forme cylindrique et la bague (18) de forme circulaire.

13. Capteur optique selon la revendication 12, **caractérisé en ce que** l'anneau (18) présente une section transversale à symétrie de révolution.

14. Capteur optique selon l'une des revendications 11 à 13, **caractérisé en ce que** l'orientation ou l'angle (β) que prend la surface de sortie (17) par rapport à l'axe optique (8) de l'optique de transmission (4) varie dans la direction circonférentielle de l'anneau (18).

15. Capteur optique selon l'une des revendications 1 à 14, **caractérisé en ce que** la face frontale libre (12) du dispositif de séparation (13) est disposée à 45° par rapport à l'axe optique (8) de l'optique d'émission est orientée parallèlement à la face frontale libre (12).

16. Capteur optique selon l'une des revendications 1 à 15, **caractérisé en ce que** les première et seconde surfaces réfléchissantes (14, 15) du dispositif (10) pour collimater les faisceaux lumineux sur l'optique de réception (6) sont alignées parallèlement l'une à l'autre.

17. Capteur optique selon l'une des revendications 1 à 16, **caractérisé en ce que** le dispositif (10) de collimation est réalisé sous la forme d'un anneau (18), est posé complémentarité de forme et/ou de force sur le dispositif de séparation cylindrique (13), se présentant comme une paroi de séparation de canal (21) entre l'optique d'émission (4) et l'optique de réception (6).

18. Capteur optique selon l'une des revendications 1 à 17, **caractérisé en ce que** le dispositif (10) de collimation est constitué d'une matière plastique, telle que le polyméthacrylate de méthyle (PMMA) ou le polycarbonate (PC).

19. Capteur optique selon l'une des revendications 1 à 18, **caractérisé en ce que** le capteur (1) est formé de telle manière que les longueurs de tous les trajets optiques menant de l'objet (O) à détecter au récepteur (5) sont approximativement ou exactement de même longueur.

20. Capteur optique selon l'une des revendications 1 à 18, **caractérisé en ce que** l'unité d'évaluation (7) est conçue pour effectuer une compensation mathématique des longueurs de tous les trajets optiques de l'objet (O) que doit détecter l'optique de réception (6).
